# FASCICULE DE BREVET EUROPEEN

(11) **EP 2 281 382 B1**
(45) Date de publication et mention de la délivrance du brevet: **25.07.2018**
(21) Numéro de dépôt: 09769500.1
(22) Date de dépôt: 29.05.2009
(51) Int. Cl.: H04L 29/06, H04L 12/58

(54) **ETABLISSEMENT AUTOMATISE D'UNE COMMUNICATION ENTRE DEUX TERMINAUX**
AUTOMATISIERTE EINRICHTUNG EINER KOMMUNIKATION ZWISCHEN ZWEI ENDGERÄTEN
AUTOMATED ESTABLISHMENT OF A COMMUNICATION BETWEEN TWO TERMINALS

(30) Priorité: 30.05.2008 FR 0853581
(43) Date de publication de la demande: 09.02.2011
(73) Titulaire: Orange, 75015 Paris (FR)
(72) Inventeur: MOUNIR ALAOUI, Salim, F-92130 Issy-les-Moulineaux (FR); PINCHAUD, Pascal, F-91290 La Norville (FR)
(86) Numéro de dépôt international: PCT/FR2009/051012
(87) Numéro de publication internationale: WO 2009/156659

(56) Documents cités:
- EP-A- 1 555 786
- WO-A-2008/004153
- WO-A-2008/049647
- US-A1- 2004 067 761
- US-A1- 2006 167 849

## Description

L'invention concerne le domaine des télécommunications et plus précisément une solution d'établissement automatisé d'une communication entre deux terminaux.

On s'intéresse ici aux techniques d'établissement automatisé d'une communication, dans lesquelles un utilisateur de l'un des deux terminaux formule expressément une requête de mise en communication entre ces deux terminaux. Une telle requête est formulée par exemple en sélectionnant, dans une liste de contacts associée à l'utilisateur concerné, un contact à joindre.

Les documents US20040067761 et US2006167849 propose des échanges de messages entre terminaux pour, après connexion au réseau IP et donc récupération de leurs adresses IP respectives, les échanger afin de pouvoir demander l'établissement d'une communication data via le réseau IP.

Le document WO2008049647, de même que le document EP1 555 786, enseigne un établissement d'une communication entre deux terminaux dans un environnement IP lorsque le destinataire n'est pas connecté au réseau IP. Pour cela, un terminal connecté au réseau IP souhaitant être mis en communication avec un terminal destinataire non connecté au réseau IP envoie un message comportant son adresse IP via un réseau autre que le réseau IP à ce terminal destinataire. Ce message commande l'établissement par ce terminal destinataire d'une communication data à travers le réseau IP avec le terminal connecté au réseau IP. Le terminal à l'initiative de la communication n'établissant pas la communication, il n'est pas identifié comme le terminal appelant de cette communication. Le terminal destinataire doit être apte à se connecter sur le réseau IP pour établir ladite communication avec le terminal connecté au réseau IP, le but étant de réduire les échecs d'établissement de communication data sur le réseau IP.

Lorsque la liste de contacts est fournie par un serveur Web, ce serveur se charge ensuite de déclencher les opérations nécessaires à la mise en communication d'un terminal de l'utilisateur ayant émis la requête avec un terminal associé au contact sélectionné.

Une première technique connue consiste à effectuer la mise en communication de deux terminaux au moyen d'une liaison conforme au protocole IP (Internet Protocol). Cette solution consiste à établir un premier lien de communication entre le serveur recevant la requête de mise en communication et un des deux terminaux, puis un deuxième lien entre ce serveur et l'autre terminal, ces deux liens étant ensuite raboutés pour établir un lien unique entre les deux terminaux, ce lien unique étant établi à travers le serveur.

Cette technique de mise en communication a l'inconvénient de consommer fortement les ressources du serveur, notamment sa bande passante. En outre, elle est applicable aux réseaux à commutation de paquet et ne convient pas pour les réseaux à commutation de circuit. En particulier, elle n'est pas applicable à une mise en communication de deux terminaux via un réseau mobile de type GSM.

Enfin, la communication étant établie à partir d'un serveur du réseau, cette solution technique pose un problème de facturation, en ce que, pour une communication établie en mode circuit, c'est usuellement le terminal émetteur de l'appel qui est facturé. Cette technique est donc incompatible avec le mode de facturation utilisé dans les réseaux à commutation de circuit.

Il apparaît donc un besoin pour une solution d'établissement automatisé d'une communication entre deux terminaux qui soit applicable aux réseaux à commutation de circuit, notamment aux réseaux mobiles GSM et compatible avec le mode de facturation utilisé dans ces réseaux.

Un procédé de commande, selon l'invention, comprend une étape de transmission à destination d'un premier terminal d'un message comprenant une commande apte à déclencher une émission par ledit premier terminal d'une demande d'établissement d'une communication entre le premier terminal et un deuxième terminal.

L'invention a pour objet, selon un premier aspect, un procédé de commande d'établissement automatisé de communication entre un premier terminal et un deuxième terminal comprenant une étape de transmission d'une commande d'un serveur de traitement (AS1) à destination d'un premier terminal (MB1) dans un message de commande, ladite commande comprenant un identifiant d'un deuxième terminal associé à un contact sélectionné au moyen du premier terminal, et étant apte à déclencher une émission par ledit premier terminal directement au deuxième terminal d'une demande d'établissement d'une communication entre le premier terminal et un deuxième terminal (MB2).

La solution proposée par l'invention permet de générer un appel, c'est-à-dire d'émettre une demande de mise en communication, directement à partir du premier terminal. De ce fait, l'appel est détecté par le réseau comme provenant directement du premier terminal et il est facturé comme tel. Aucune modification des serveurs mettant en oeuvre de la facturation n'est nécessaire. Enfin, il n'est plus nécessaire de disposer d'un dispositif réseau pour générer un appel.

La demande de mise en communication étant déclenchée par le terminal initiateur de l'appel, il est en outre possible de mettre en oeuvre une procédure de validation par l'utilisateur de ce terminal afin de n'émettre la demande de mise en communication que sur approbation de l'utilisateur.

Selon un mode de réalisation du procédé selon le message de commande est envoyé au premier terminal par un serveur de messages affecté à l'acheminement de messages dans le réseau à travers lequel ladite communication doit être établie.

L'invention tire partie des infrastructures existantes dans le réseau pour l'acheminement du message et la commande du terminal.

Selon un mode de réalisation particulier, l'étape de transmission est effectuée suite à la réception par ledit serveur de traitement d'une requête de mise en communication formulée par un utilisateur dudit premier terminal. Notamment, le serveur de messages transmet le message sur commande du serveur de traitement suite à la réception par le serveur de traitement d'une requête de mise en communication.

L'utilisateur est ainsi en mesure de spécifier avec quel terminal la communication doit être établie.

Un dispositif de commande, selon l'invention, comprend des moyens de transmission à destination d'un premier terminal d'un message comprenant une commande destinée à être transmise au premier terminal en vue de déclencher une émission par ledit premier terminal d'une demande d'établissement d'une communication entre ledit premier terminal et un deuxième terminal.

Corrélativement, l'invention a pour objet un dispositif (SM1, GW1, AS1) de commande d'établissement automatisé de communication entre un premier terminal et un deuxième terminal comprenant des moyens de transmission à destination d'un premier terminal (MB1) d'une commande d'un serveur de traitement (AS1) destinée à être transmise au premier terminal dans un message de commande comprenant ladite commande comprenant un identifiant d'un deuxième terminal associé à un contact sélectionné au moyen du premier terminal, et étant apte à déclencher une émission par ledit premier terminal directement au deuxième terminal d'une demande d'établissement d'une communication entre ledit premier terminal et un deuxième terminal (MB2)

Un terminal, selon l'invention, comprend des moyens de réception et de traitement d'un message comprenant une commande apte à déclencher une émission par ledit terminal d'une demande de mise en communication avec un deuxième terminal.

L'invention a également pour objet un terminal (MB1) comprenant des moyens de réception et de traitement d'un message, ledit message comprenant une commande d'un serveur de traitement (AS1), ladite commande comprenant un identifiant d'un deuxième terminal associé à un contact sélectionné au moyen du premier terminal, et étant apte à déclencher une émission automatique par ledit terminal directement au deuxième terminal d'une demande de mise en communication avec un deuxième terminal (MB2)

Les avantages énoncés pour le procédé selon l'invention sont transposables directement au dispositif et au terminal selon l'invention.

Selon un mode de réalisation, le dispositif selon l'invention fait partie d'un serveur d'acheminement de messages pour un réseau à travers lequel ladite communication doit être établie, les moyens de transmission étant dans ce cas destinés à être activés sur commande en provenance d'un dispositif d'interconnexion entre un premier et le deuxième réseau.

Selon encore un autre mode de réalisation, le dispositif selon l'invention fait partie d'un serveur de traitement de requêtes utilisateur, les moyens de transmission étant destinés à être activés sur requête de mise en communication formulée par un utilisateur dudit premier terminal.

Selon un autre mode de réalisation, le dispositif selon l'invention fait partie d'un dispositif d'interconnexion entre un premier et un deuxième réseau à travers lequel ladite communication doit être établie, les moyens de transmission étant dans ce cas destinés à être activés sur commande en provenance d'un serveur de traitement suite à la réception par ledit serveur de traitement (AS1) d'une requête de mise en communication formulée par un utilisateur dudit premier terminal.

Un signal de commande, selon l'invention, est porteur d'une commande destinée à être transmise à un premier terminal pour déclencher une émission par ce premier terminal d'une demande d'établissement d'une communication entre ce premier terminal et un deuxième terminal.

L'invention a également pour objet un signal de commande d'établissement automatisé de communication entre un premier terminal et un deuxième terminal, porteur d'une commande d'un serveur de traitement (AS1), ladite commande comprenant un identifiant d'un deuxième terminal associé à un contact sélectionné au moyen du premier terminal, et étant destinée à être transmise à un premier terminal (MB1) pour déclencher une émission par ledit premier terminal directement au deuxième terminal d'une demande d'établissement d'une communication entre le premier terminal et un deuxième terminal (MB2).

Le signal est par exemple un signal électrique ou électromagnétique - un signal radio ou optique - acheminé via un moyen de transmission approprié, filaire ou non filaire.

Le signal comprend notamment un identifiant du deuxième terminal (sous forme par exemple de numéro de téléphone ou d'adresse IP), et, optionnellement, un identifiant du premier terminal. Le signal est porteur en outre d'un code identifiant la commande et permettant donc de traiter de manière adéquate cette commande.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un dispositif selon l'invention et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon une autre implémentation, l'invention est mise en oeuvre au moyen de composants logiciels et matériels. Dans cette optique, le terme module peut correspondre dans ce document aussi bien à un composant logiciel ou qu'à un composant matériel. Un composant logiciel correspond à un ou plusieurs programmes d'ordinateur, un ou plusieurs sous-programmes d'un programme, ou de manière plus générale à tout élément d'un programme conçu pour mettre en oeuvre une fonction ou un ensemble de fonctions. Un composant matériel correspond à tout élément d'un ensemble matériel (ou hardware) conçu pour mettre en oeuvre une fonction ou un ensemble de fonctions.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système de communication intégrant les dispositifs selon l'invention;
- la figure 2 représente un organigramme d'un mode de réalisation du procédé selon l'invention;
- les figures 3 et 4 représentent de manière schématique un échange de données entre deux entités du système de communication de la figure 1.

L'invention est décrite dans le contexte de son application à réseau GSM et dans le cas de l'utilisation de messages de commande conformes au service SMS (Short Message Service). L'invention est donc décrite dans le contexte d'établissement de communication vocale. Elle est cependant applicable à un autre type de réseau, moyennant l'utilisation d'un format de commande approprié.

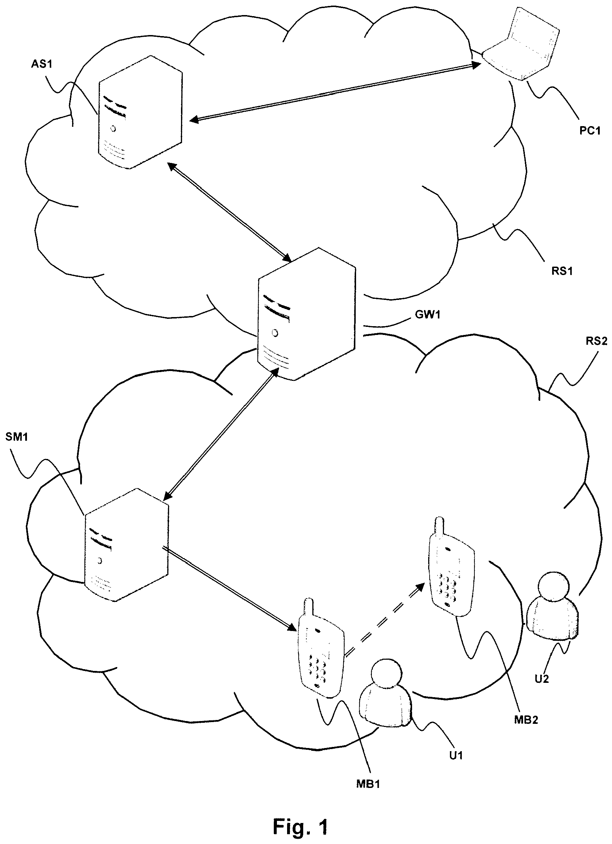

Le système de la figure 1 est une représentation simplifiée d'un système de communication pour la mise en oeuvre de l'invention.

Ce système comprend:
- un premier réseau RS1, en l'occurrence le réseau Internet,
- un deuxième réseau RS2, en l'occurrence un réseau mobile, par exemple de type GSM, UMTS, etc;
- un serveur applicatif AS1,
- une base de données DB,
- une passerelle GW,
- un centre serveur de messages SM1,
- un premier terminal mobile MB11,
- un deuxième terminal mobile MB2,
- un terminal fixe PC1.

Le serveur applicatif AS1 est un serveur Web proposant un service d'établissement automatisé d'une communication entre deux terminaux. Le serveur applicatif AS1 est associé à une base de données DB permettant de stocker, en association avec un identifiant d'utilisateur, une liste de contacts.

L'accès au service proposé par ce serveur est possible, de manière connue, par simple connexion établie à travers le réseau RS1 entre un terminal et ce serveur.

Lorsqu'un utilisateur établit au moyen de son terminal une connexion au serveur applicatif AS1, celui-ci fournit une liste de contacts associé à cet utilisateur, pour lesquels une mise en communication automatisée est possible.

La passerelle GW est une passerelle d'interconnexion entre le réseau RS1 et le réseau RS2.

La passerelle GW1 est conçue pour interagir avec un ou plusieurs serveurs applicatifs, notamment avec le serveur applicatif AS1. Elle met en oeuvre différents services pour ces serveurs applicatifs, chacun de ces services étant activable à travers une ou des interfaces de commandes (API, Application Program Interface) de la passerelle GW1. Le serveur applicatif AS1 comprend ainsi un module de commande pour envoyer des messages de commande à la passerelle GW1. Réciproquement, la passerelle GW1 comprend un module de réception et de traitement des messages de commande émis par les serveurs applicatifs avec lesquels elle interagit.

Le centre serveur de messages SM1 est un serveur de messages affecté à l'acheminement de messages dans le réseau RS2. Lorsque le réseau RS2 est un réseau GSM, ce serveur est un centre serveur de message (SMS-C, Short Message Service Center) tel que défini dans la norme GSM. Le centre serveur de messages SM1 est susceptible d'être commandé à partir de la passerelle GW1 par envoi de messages de commande conformes au protocole SMPP (Short Message Peer to Peer). La passerelle GW1 comprend ainsi un module de commande pour envoyer des commandes au centre serveur de messages SM1. Réciproquement, le centre serveur de messages SM1 comprend un module de réception et de traitement des messages de commande émis par la passerelle GW1 ou par les serveurs du réseau RS2 susceptibles de lui envoyer des messages de commande.

Un utilisateur U1 du terminal mobile MB1 est susceptible d'accéder au serveur applicatif AS1 au moyen de son terminal mobile MB1 connecté au réseau RS2. Dans ce cas, la liaison entre le terminal mobile MB1 et le serveur applicatif AS1 est établie à travers la passerelle GW1.

Ce même utilisateur U1 est susceptible d'accéder au serveur applicatif AS1 au moyen de son terminal fixe PC1 connecté au réseau RS1. Dans ce cas, la liaison entre le terminal fixe PC1 et le serveur applicatif AS1 est établie via le réseau RS1 sans passer par la passerelle GW1.

Dans la suite de la description, on note U2 l'utilisateur du terminal mobile MB2 avec lequel l'utilisateur U1 souhaite établir une communication.

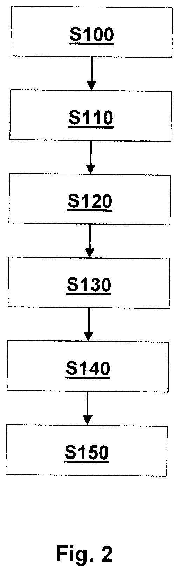

Les étapes S100 à S150 du procédé selon l'invention sont décrites plus en détail par référence à la figure 2.

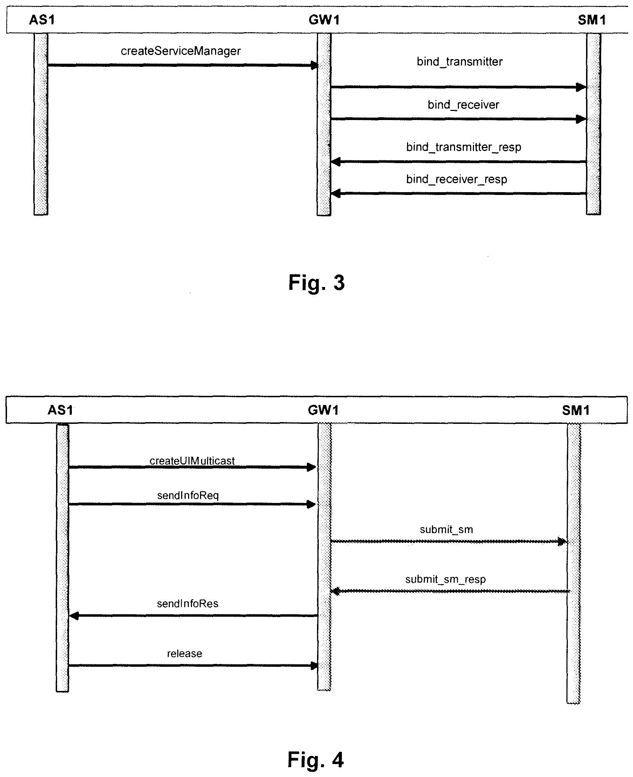

Au cours d'une étape S100 initiale, illustrée plus en détail à la figure 3, le serveur applicatif AS1 s'enregistre auprès de la passerelle GW1 de manière à être reconnu par cette plateforme et à pouvoir lui transmettre des messages de commande.

Dans le cas où la passerelle GW1 présente une interface de commande conforme au standard OSA/Parlay permettant une interaction avec un utilisateur au travers d'échanges de messages vocaux, SMS, MMS, etc (ce service d'interaction étant nommé "User Interaction Service" dans le standard OSA/Parlay), cette étape d'enregistrement consiste à envoyer un message de commande nommé "CreateServiceManager" à la passerelle GW1, afin d'obtenir en retour un identifiant de service associé au service rendu par la passerelle GW1 pour le compte du serveur applicatif AS1.

A réception d'un tel message de commande, la passerelle GW1 envoie, conformément au protocole SMPP (Short Message Peer to Peer), deux messages de commande, nommés respectivement "bind_transmitter" et "bind_receiver" par lesquels la passerelle GW1 initie le dialogue avec le centre serveur de messages SM1 dans le but de lui transmettre des commandes d'envoi, respectivement de réception, de messages courts de type SMS (Short Message Service).

Le centre serveur de messages SM1 acquitte ensuite réception de ces deux messages de commande en envoyant les deux messages de réponse, conformes au protocole SMPP, nommés respectivement "bind_transmitter_resp" et "bind_receiver_resp".

A réception de ces deux messages de réponse, la plateforme GW1 envoie un identifiant de service affecté à la communication entre le serveur applicatif AS1 et la passerelle GW1.

A l'étape S110, l'utilisateur U1 du terminal mobile MB1 se connecte au serveur applicatif AS1, successivement à travers le réseau RS1, la passerelle GW1 puis le réseau RS2. Ce serveur applicatif AS1 propose un service de mise en communication automatisée à partir d'un terminal mobile.

Pour requérir une telle mise en communication, l'utilisateur U1 doit sélectionner, parmi une liste de contacts générée par le serveur applicatif AS1, transférée puis affichée sur son terminal mobile MB1, un contact, c'est-à-dire un identifiant d'un utilisateur U2, avec lequel il souhaite établir une communication. La sélection d'un contact parmi la liste de contacts provoque l'envoi au serveur applicatif AS1 d'une requête Web par laquelle l'utilisateur requiert la mise en communication avec ce contact.

A partir du nom de ce contact et d'un identifiant du terminal MB1 ou de l'utilisateur U1 connecté, le serveur applicatif AS1 détermine, d'une part, l'identifiant du terminal mobile MB1 de l'utilisateur U1 connecté et, d'autre part, un identifiant de terminal mobile MB2 associé à l'utilisateur U2 dont le nom a été sélectionné, les identifiants utilisés ici étant en l'occurrence le numéro de téléphone du terminal mobile correspondant.

A l'étape S120, le serveur applicatif AS1 envoie un message de commande à destination de la passerelle GW1.

Ce message de commande, nommé ici "ClickToCall", comprend au moins deux paramètres: l'adresse du terminal mobile MB1 et l'adresse du terminal mobile MB2. Dans le cas où le message de commande "ClickToCall" est émise conformément à la norme 3GPP TS 29.198-02, ces adresses sont codées au moyen d'une structure de données nommée "TpAddress" comprenant les champs d'information suivants:

| **Nom du champ** | **Type du champ** |
|---|---|
| Plan | TpAddressPlan |
| AddrString | TpString |
| Name | TpString |
| Presentation | TpAddressPresentation |
| Screening | TpAddressScreening |
| SubAddressString | TpString |

dans lesquels :
- "Plan" représente le plan de numérotation (national / international),
- "AddrString" représente le numéro de téléphone du terminal,
- "Name" représente le nom du terminal,
- "Présentation" représente le mode de présentation du numéro (masqué ou non),
- "Screening" représente un code de gestion des autorisations pour les numéros spécifiques (numéros verts, etc)
- "SubAddrString" représente un numéro de téléphone secondaire, dans le cas où le terminal est accessible uniquement à travers un PABX.

Pour plus de détails sur ces champs d'information, le lecteur se référera à la norme précitée.

A l'étape S130, illustrée plus en détail à la figure 4, le serveur applicatif AS1 transmet à la passerelle GW1 le message SMS à transférer au terminal mobile MB1.

Pour cela, le serveur applicatif AS1 envoie en premier lieu un message de commande à destination de la passerelle GW1 afin d'initier un dialogue entre le serveur applicatif AS1 et la passerelle GW1. Ce message de commande, conforme au standard OSA/Parlay, est nommé "CreateUIMulticast".

Le serveur applicatif AS1 envoie ensuite à la passerelle GW1 un message de commande, conforme au standard OSA/Parlay, nommé "SendInfoReq", comprenant (encapsulant) le message SMS à transmettre au terminal mobile MB1.

A réception du message de commande "SendInfoReq", la passerelle GW1 extrait de ce message de commande le message SMS, puis envoie elle-même un message de commande, nommé "submit_sm", conforme au protocole SMPP, comprenant le message SMS à transmettre au terminal mobile terminal mobile MB1.

A réception de ce message de commande, le centre serveur de messages SM1 envoie le message SMS au MB1, puis envoie en retour un message de réponse, nommé "submit_sm_resp", à la passerelle GW1 pour lui indiquer que le message SMS a été effectivement envoyé.

A réception du message de réponse "submit_sm_resp", la passerelle GW1 envoie un message de réponse, conforme au standard OSA/Parlay, nommé "SendInfoRes", pour signaler au serveur applicatif AS1 le résultat de l'exécution de la commande précédemment transmise via le message "SendInfoReq".

A réception du message de réponse "SendInfoRes", le serveur applicatif AS1 envoie un message de commande à la passerelle GW1 afin de mettre fin au dialogue entre le serveur applicatif AS1 et la passerelle GW1. Ce message de commande, conforme au standard OSA/Parlay, est nommé "Release". Il clôt le dialogue initié par le message de commande "CreateUIMulticast".

A l'étape S140, le terminal mobile MB1 reçoit le message de commande SMS émis par le centre serveur de messages SM1.

Ce message de commande est interprété par le terminal mobile MB1 et provoque automatiquement l'émission à travers le réseau RS2 d'une demande d'établissement d'une communication avec le terminal mobile destinataire MB2 spécifié dans le message SMS.

Le format des messages de commande de type SMS est spécifié par la norme ETSI TS 102 223 V4.10.0 (2004-09). Lorsqu'un message conforme à cette norme est reçu par un téléphone mobile ou un équipement possédant des fonctionnalités de communication équivalentes, la carte SIM (Suscriber Identity Module) de cet équipement interprète le message de commande et exécute la ou les opérations spécifiées par la ou les commandes inclues dans ce message de commande.

En l'occurrence, l'invention vise à définir un nouveau message de commande pour déclencher une opération de demande de mise en communication, à partir du terminal recevant ce message de commande et à destination d'un autre terminal, dont le numéro est spécifié dans ce message de commande.

En l'occurrence, le message de commande comprend une commande de type "Setup a Call". La commande comprend notamment le numéro du terminal mobile terminal mobile terminal mobile MB2 ainsi que les champs suivants:

| Champ d'information | Valeur (exemple) |
|---|---|
| Tag principal de la commande | D0 |
| Taille de la commande | 28 |
| Détails de la commande | 01(tag) 03 (taille) 01 (set up) 10 (type) 00 (option) |

| | |
|---|---|
| Identité | 82 (tag) 02 (taille) 83 (du réseau) 82 (vers mobile) |
| Adresse de destination | 06 (tag) 12 (taille) 1001 (international) 0001 (ISDN) 06 76 74 47 33 (numéro de destination) |

Plus précisément, à réception du message de commande, le terminal génère un appel en composant le numéro de téléphone du terminal destinataire et en émettant, de manière connue, un signal de demande de mise en communication.

A l'étape S150, la demande de mise en communication est notifiée via le réseau RS2 au terminal mobile MB2, qui sonne. Si l'utilisateur U2 du terminal mobile MB2 répond, la communication est établie entre le terminal mobile MB1 et le terminal mobile MB2. Dans ce cas, la communication est facturée à l'utilisateur U1 du terminal mobile MB1, au même titre qu'un appel qui aurait été composé manuellement par cet utilisateur U1 sur son terminal mobile MB1.

Si au contraire l'utilisateur U2 du terminal mobile MB2 ne répond pas, la communication n'est pas établie et aucune communication n'est facturée ni à l'utilisateur U1, ni à l'utilisateur U2. L'utilisateur U1 a la possibilité de laisser un message sur le répondeur de l'utilisateur U2.

Selon une variante de réalisation, l'utilisateur U1 du terminal mobile MB1 accède au serveur applicatif AS1 au moyen d'un terminal différent du terminal MB1, par exemple un terminal de type ordinateur personnel terminal PC1. Dans ce cas, le terminal mobile MB1 auquel doit être envoyé le message SMS de commande est identifié à partir de l'identifiant du terminal PC1 ou d'un identifiant de l'utilisateur U1 fourni par cet utilisateur lors de sa connexion au serveur applicatif AS1.

L'invention permet de proposer une solution de mise en communication automatisée par envoi d'une commande destinée à déclencher automatiquement l'émission par le terminal récipiendaire d'une demande de mise en communication. Elle trouve un intérêt particulier dans le domaine des réseaux mobiles. Elle est néanmoins transposable à des communications à établir à travers un réseau fixe, par utilisation de commandes et protocoles appropriés.

## Revendications

1. Procédé de commande d'établissement automatisé de communication entre un premier terminal et un deuxième terminal suite à une sélection par un utilisateur du premier terminal (MB1) d'un contact, ledit procédé comprenant une étape de transmission d'une commande d'un serveur de traitement (AS1) à destination du premier terminal (MB1) dans un message de commande, ladite commande :
- comprenant un identifiant du deuxième terminal associé au contact sélectionné au moyen du premier terminal, et
- étant apte à déclencher une émission par ledit premier terminal directement au deuxième terminal d'une demande d'établissement d'une communication entre le premier terminal et le deuxième terminal (MB2).

2. Procédé selon la revendication 1, dans lequel la communication est une communication vocale.

3. Procédé selon la revendication 1, dans lequel ledit message de commande est envoyé au premier terminal par un serveur de messages (SM1) affecté à l'acheminement de messages dans un réseau (RS2) à travers lequel ladite communication doit être établie.

4. Procédé selon la revendication 3, dans lequel l'étape de transmission est effectuée suite à la réception par ledit serveur de traitement (AS1) d'une requête de mise en communication formulée par un utilisateur dudit premier terminal.

5. Procédé selon la revendication 1, dans lequel ladite requête est émise par un troisième terminal (PC1), différent du premier terminal (MB1).

6. Dispositif (SM1, GW1, AS1) de commande d'établissement automatisé de communication entre un premier terminal et un deuxième terminal suite à une sélection par un utilisateur du premier terminal (MB1) d'un contact, ledit dispositif comprenant des moyens de transmission à destination du premier terminal (MB1) d'une commande d'un serveur de traitement (AS1) destinée à être transmise au premier terminal dans un message de commande, ladite commande :
- comprenant un identifiant du deuxième terminal associé à un contact sélectionné au moyen du premier terminal, et
- étant apte à déclencher une émission par ledit premier terminal directement au deuxième terminal d'une demande d'établissement d'une communication entre ledit premier terminal et un deuxième terminal (MB2).

7. Dispositif selon la revendication 6, dans lequel la communication est une communication vocale.

8. Serveur (SM1) d'acheminement de messages pour un réseau (RS2) à travers lequel ladite communication doit être établie comprenant un dispositif selon la revendication 6 dans lequel lesdits moyens de transmission sont destinés à être activés sur commande en provenance d'un dispositif (GW1) d'interconnexion entre un premier (RS1) et le deuxième réseau (RS2).

9. Dispositif (GW1) d'interconnexion entre un premier (RS1) et un deuxième réseau (RS2) à travers lequel ladite communication doit être établie, ledit dispositif d'interconnexion comprenant un dispositif selon la revendication 6, dans lequel lesdits moyens de transmission sont destinés à être activés sur commande en provenance dudit serveur de traitement (AS1) suite à la réception par ledit serveur de traitement (AS1) d'une requête de mise en communication formulée par un utilisateur dudit premier terminal.

10. Serveur de traitement (AS1) de requêtes utilisateur comprenant un dispositif selon la revendication 6, dans lequel lesdits moyens de transmission sont destinés à être activés sur requête de mise en communication formulée par un utilisateur dudit premier terminal.

11. Terminal (MB1), dit premier terminal, comprenant des moyens de réception et de traitement d'un message reçu suite à une sélection par un utilisateur du premier terminal (MB1) d'un contact, ledit message comprenant une commande en provenance d'un serveur de traitement (AS1), ladite commande :
- comprenant un identifiant d'un deuxième terminal associé au contact sélectionné au moyen du premier terminal, et
- étant apte à déclencher une émission automatique par ledit premier terminal directement au deuxième terminal d'une demande de mise en communication avec un deuxième terminal (MB2).

12. Terminal selon la revendication 11, dans lequel la communication est une communication vocale.

13. Signal de commande d'établissement automatisé de communication entre un premier terminal et un deuxième terminal suite à une sélection par un utilisateur du premier terminal (MB1) d'un contact, ledit signal étant porteur d'une commande d'un serveur de traitement (AS1), ladite commande comprenant un identifiant du deuxième terminal associé au contact sélectionné au moyen du premier terminal, étant destinée à être transmise au premier terminal (MB1), et étant capable de déclencher une émission par ledit premier terminal directement au deuxième terminal d'une demande d'établissement d'une communication entre le premier terminal et un deuxième terminal (MB2).

14. Programme informatique comprenant des instructions logicielles pour la mise en oeuvre d'un procédé selon l'une des revendications 1 à 5 lorsque ledit programme est exécuté par un processeur de données.

15. Support d'enregistrement lisible par un processeur de données sur lequel est enregistré un programme comprenant des instructions de code de programme pour l'exécution des étapes d'un procédé selon l'une des revendications 1 à 5.

## Patentansprüche

1. Verfahren zum Befehl des automatisierten Aufbaus einer Kommunikation zwischen einem ersten Endgerät und einem zweiten Endgerät nach einer Auswahl eines Kontakts durch einen Benutzer des ersten Endgeräts (MB1), wobei das Verfahren einen Schritt der Übertragung eines Befehls von einem Verarbeitungsserver (AS1) an das erste Endgerät (MB1) in einer Befehlsnachricht enthält, wobei der Befehl:
- eine Kennung des zweiten Endgeräts enthält, das dem mittels des ersten Endgeräts ausgewählten Kontakt zugeordnet ist, und
- in der Lage ist, ein Senden durch das erste Endgerät direkt an das zweite Endgerät einer Anforderung eines Aufbaus einer Kommunikation zwischen dem ersten Endgerät und dem zweiten Endgerät (MB2) auszulösen.

2. Verfahren nach Anspruch 1, wobei die Kommunikation eine Sprachkommunikation ist.

3. Verfahren nach Anspruch 1, wobei die Befehlsnachricht an das erste Endgerät von einem Nachrichtenserver (SM1) geschickt wird, der der Beförderung von Nachrichten in einem Netz (RS2) zugewiesen ist, über das die Kommunikation aufgebaut werden soll.

4. Verfahren nach Anspruch 3, wobei der Übertragungsschritt nach dem Empfang vom Verarbeitungsserver (AS1) einer von einem Benutzer des ersten Endgeräts formulierten Verbindungsanforderung ausgeführt wird.

5. Verfahren nach Anspruch 1, wobei die Anforderung von einem dritten Endgerät (PC1) gesendet wird, das sich vom ersten Endgerät (MB1) unterscheidet.

6. Vorrichtung (SM1, GW1, AS1) zum Befehl des automatisierten Aufbaus einer Kommunikation zwischen einem ersten Endgerät und einem zweiten Endgerät nach einer Auswahl eines Kontakts durch einen Benutzer des ersten Endgeräts (MB1), wobei die Vorrichtung Einrichtungen zur Übertragung an das erste Endgerät (MB1) eines Befehls eines Verarbeitungsservers (AS1) enthält, der dazu bestimmt ist, an das erste Endgerät in einer Befehlsnachricht übertragen zu werden, wobei der Befehl:
- eine Kennung des zweiten Endgeräts enthält, das einem mittels des ersten Endgeräts ausgewählten Kontakt zugeordnet ist, und
- fähig ist, eine Sendung durch das erste Endgerät direkt an das zweite Endgerät einer Anforderung zum Aufbau einer Kommunikation zwischen dem ersten Endgerät und einem zweiten Endgerät (MB2) auszulösen.

7. Vorrichtung nach Anspruch 6, wobei die Kommunikation eine Sprachkommunikation ist.

8. Server (SM1) zur Beförderung von Nachrichten für ein Netz (RS2), über das die Kommunikation aufgebaut werden soll, der eine Vorrichtung nach Anspruch 6 enthält, wobei die Übertragungseinrichtungen dazu bestimmt sind, auf einen Befehl von einer Verbindungsvorrichtung (GW1) zwischen einem ersten (RS1) und dem zweiten (RS2) aktiviert zu werden.

9. Vorrichtung (GW1) zur Verbindung zwischen einem ersten (RS1) und einem zweiten Netz (RS2), über das die Kommunikation aufgebaut werden soll, wobei die Verbindungsvorrichtung eine Vorrichtung nach Anspruch 6 enthält, wobei die Übertragungseinrichtungen dazu bestimmt sind, nach dem Empfang einer von einem Benutzer des ersten Endgeräts formulierten Kommunikationsanforderung durch den Verarbeitungsserver (AS1) auf Befehl vom Verarbeitungsserver (AS1) aktiviert zu werden.

10. Verarbeitungsserver (AS1) von Benutzeranforderungen, der eine Vorrichtung nach Anspruch 6 enthält, wobei die Übertragungseinrichtungen dazu bestimmt sind, nach einer von einem Benutzer des ersten Endgeräts formulierten Kommunikationsanforderung aktiviert zu werden.

11. Endgerät (MB1), erstes Endgerät genannt, das Einrichtungen zum Empfang und zur Verarbeitung einer nach einer Auswahl eines Kontakts durch einen Benutzer des ersten Endgeräts (MB1) empfangenen Nachricht enthält, wobei die Nachricht einen von einem Verarbeitungsserver (AS1) kommenden Befehl enthält, wobei der Befehl:
- eine Kennung des zweiten Endgeräts enthält, das dem mittels des ersten Endgeräts ausgewählten Kontakt zugeordnet ist, und
- fähig ist, ein automatisches Senden durch das erste Endgerät direkt an das zweite Endgerät einer Kommunikationsanfrage mit einem zweiten Endgerät (MB2) auszulösen.

12. Endgerät nach Anspruch 11, wobei die Kommunikation eine Sprachkommunikation ist.

13. Befehlssignal für den automatisierten Aufbau einer Kommunikation zwischen einem ersten Endgerät und einem zweiten Endgerät nach einer Auswahl eines Kontakts durch einen Benutzer des ersten Endgeräts (MB1), wobei das Signal einen Befehl eines Verarbeitungsservers (AS1) trägt, wobei der Befehl eine Kennung des zweiten Endgeräts enthält, das dem mittels des ersten Endgeräts ausgewählten Kontakt zugeordnet ist, dazu bestimmt ist, an das erste Endgerät (MB1) übertragen zu werden, und fähig ist, ein Senden durch das erste Endgerät direkt an das zweite Endgerät einer Aufbauanforderung einer Kommunikation zwischen dem ersten Endgerät und einem zweiten Endgerät (MB2) auszulösen.

14. EDV-Programm, das Software-Anweisungen zur Durchführung eines Verfahrens nach einem der Ansprüche 1 bis 5 enthält, wenn das Programm von einem Datenprozessor ausgeführt wird.

15. Datenprozessor-lesbarer Aufzeichnungsträger, auf dem ein Programm aufgezeichnet ist, das Programmcodeanweisungen zur Ausführung der Schritte eines Verfahrens nach einem der Ansprüche 1 bis 5 enthält.

## Claims

1. Method for controlling the automatic establishment of communication between a first terminal and a second terminal subsequent to a selection, by a user of the first terminal (MB1), of a contact, said method comprising a step of transmitting a command from a processing server (AS1) to the first terminal (MB1) in a command message, said command:
- comprising an identifier of the second terminal associated with the contact selected by means of the first terminal; and
- being capable of triggering a transmission, by said first terminal directly to the second terminal, of a request to establish a communication between the first terminal and the second terminal (MB2).

2. Method according to Claim 1, wherein the communication is a voice communication.

3. Method according to Claim 1, wherein said command message is sent to the first terminal by a message server (SM1) responsible for routing messages in a network (RS2) through which said communication is to be established.

4. Method according to Claim 3, wherein the transmission step is carried out subsequent to the reception, by said processing server (AS1), of a communication instigation request formulated by a user of said first terminal.

5. Method according to Claim 1, wherein said request is transmitted by a third terminal (PC1), different from the first terminal (MB1).

6. Device (SM1, GW1, AS1) for controlling the automatic establishment of communication between a first terminal and a second terminal subsequent to a selection, by a user of the first terminal (MB1), of a contact, said device comprising means for transmitting a command from a processing server (AS1) to the first terminal (MB1), which command is intended to be transmitted to the first terminal in a command message, said command:
- comprising an identifier of the second terminal associated with a contact selected by means of the first terminal; and
- being capable of triggering a transmission, by said first terminal directly to the second terminal, of a request to establish a communication between said first terminal and a second terminal (MB2).

7. Device according to Claim 6, wherein the communication is a voice communication.

8. Server (SM1) for routing messages for a network (RS2) through which said communication is to be established comprising a device according to Claim 6 wherein said transmission means are intended to be activated on a command from a device (GW1) for interconnection between a first (RS1) and the second network (RS2).

9. Device (GW1) for interconnection between a first (RS1) and a second network (RS2) through which said communication is to be established, said interconnection device comprising a device according to Claim 6, wherein said transmission means are intended to be activated on a command from said processing server (AS1) subsequent to the reception, by said processing server (AS1), of a communication instigation request formulated by a user of said first terminal.

10. Server (AS1) for processing user requests comprising a device according to Claim 6, wherein said transmission means are intended to be activated on a communication instigation request formulated by a user of said first terminal.

11. Terminal (MB1), referred to as the first terminal, comprising means for receiving and for processing a message received subsequent to a selection, by a user of the first terminal (MB1), of a contact, said message comprising a command from a processing server (AS1), said command:
- comprising an identifier of the second terminal associated with the contact selected by means of the first terminal; and
- being capable of triggering an automatic transmission, by said first terminal directly to the second terminal, of a request to instigate a communication with a second terminal (MB2).

12. Terminal according to Claim 11, wherein the communication is a voice communication.

13. Signal for controlling the automatic establishment of communication between a first terminal and a second terminal subsequent to a selection, by a user of the first terminal (MB1), of a contact, said signal carrying a command from a processing server (AS1), said command comprising an identifier of the second terminal associated with the contact selected by means of the first terminal, which command is intended to be transmitted to the first terminal (MB1), and being capable of triggering a transmission, by said first terminal directly to the second terminal, of a request to establish a communication between the first terminal and a second terminal (MB2).

14. Computer program comprising software instructions for implementing a method according to one of Claims 1 to 5 when said program is run by a data processor.

15. Recording medium that can be read by a data processor on which is recorded a program comprising program code instructions for executing the steps of a method according to one of Claims 1 to 5.
